# EUROPEAN PATENT APPLICATION

(11) **EP 2 083 384 A1**
(43) Date of publication of application: **29.07.2009**
(21) Application number: 09151180.8
(22) Date of filing: 23.01.2009
(51) Int. Cl.: G06Q 10/00

(54) **Method and system for incentive-based knowledge-integrated collaborative change management**

(30) Priority: 28.01.2008 US 23925 P; 13.01.2009 US 319854
(71) Applicant: Siemens Corporate Research, INC., Princeton, NJ 08540 (US)
(72) Inventor: Lo, Ren-Yi, East Windsor, NJ 08520 (US)
(74) Representative: Clarke, Alison Clare

(57) **Abstract**

A change management system and method is disclosed. The change management system maintains an integrated database. The integrated database includes a change management database that stores a collaborative project and information related to changes to the collaborative project, a knowledge database that stores information sources to help a user resolve a change request, and an incentive accounts database that stores incentive accounts associated with users of the change management system. The change management system also includes a search engine to search the integrated database for information related to a change request, and an interactive social network interface for accessing experts over an interactive social network. This change management system provides an integrated knowledge management system, support and management of peer interactions over a social network, and an incentive component to encourage productive collaborations.

## Description

This application claims the benefit of U.S. Provisional Application No. 61/023,925, filed January 28, 2008, the disclosure of which is herein incorporated by reference.

### BACKGROUND OF THE INVENTION

The present invention relates to change management, and more particularly, to incentive-based knowledge-integrated collaborative change management.

Change management (CM) refers to a process of managing changes to a collaborative project that is worked on by a number of people. A CM tool typically is used to control and organize the CM process for all the people involved with a project. For example, in software development, CM tools, such as Rational ClearQuest® from IBM ®, are used to manage change requests (RQ) in addition to the main workflow process steps for developing software.

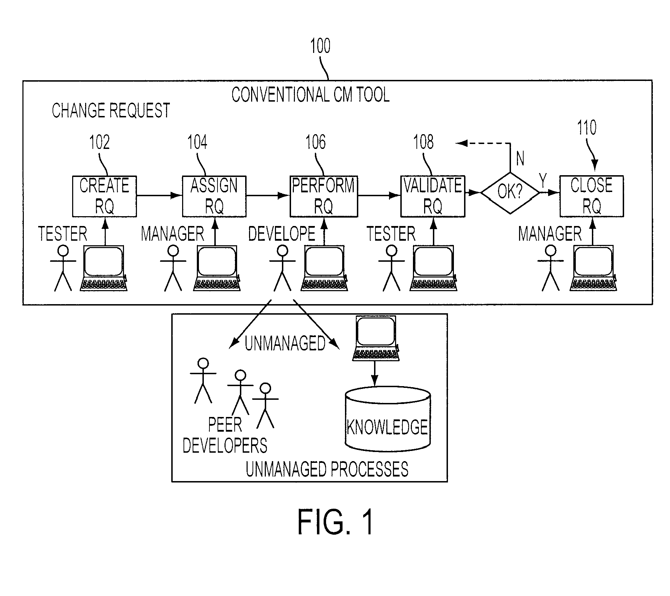

FIG. 1 illustrates a workflow of a conventional change management (CM) tool handling a change request (RQ). It is to be understood that the workflow illustrated in FIG. 1 is highly simplified, and a CM tool may provide more sophisticated functions that are known to those skilled in the art. As illustrated in FIG. 1, CM tool 100 manages the workflow of a change request (RQ). The workflow begins by creation of the RQ (102) in the CM tool 100. For example, in software development, a tester testing a portion of code may find a problem and enter an RQ that requests a solution to the problem into the CM tool 100. The RQ is sent to a manager, who assigns the RQ (104) to a developer, who is responsible for performing the RQ (106) by changing the code to resolve the problem. Once RQ is performed, the RQ is returned to the tester in order to be validated (108). If the changes made by the developer are acceptable, the RQ is closed (110) in the CM tool 100, for example by a manager. If the changes are not acceptable, the workflow is repeated until the changes are acceptable.

When the developer receives the RQ from the manager, the developer may not always know how to solve the RQ immediately. The developer may need to research the solution by seeking help from various sources including knowledge repositories, such as the internet or document libraries, as well as peers with appropriate expertise. These sources are not managed by the CM tool 100 and the interaction between these sources and the developer is not managed by the CM tool 100. Accordingly, performing research using such unmanaged sources can be time-consuming, inefficient, and non-productive. Furthermore, collaboration in researching or performing the RQ is based on good will, since performance is measured by accomplishment of one's own assignments, not by supporting others. In addition, the quality of collaboration and information sources varies, and conventional CM tools do not have any mechanism for measuring the usefulness of information sources and collaborations.

### BRIEF SUMMARY OF THE INVENTION

The present invention provides a change management method and system that supports and manages interactions with knowledge sources. Embodiments of the present invention provide a change management system that includes an integrated knowledge management system, supports and manages peer interactions over social networks, and includes an incentive component to encourage productive collaborations.

In one embodiment of the present invention, a change management system maintains an integrated database. The integrated database includes a change management database that stores a collaborative project and information related to changes to the collaborative project, a knowledge database that stores information sources to help a user resolve a change request, and an incentive accounts database that stores incentive accounts associated with users of the change management system. The change management system also includes a search engine to search the integrated database for information related to a change request, and an interactive social network interface for accessing experts over an interactive social network.

In another embodiment of the present invention, a change request (RQ) is received in a change management (CM) system. An integrated database maintained by the CM system is searched for information related to the RQ, and one or more experts are accessed on an interactive social network supported by the CM system via an interactive social network interface of the CM system. The RQ is resolved based on the information in the integrated database and from the experts accessed on the interactive social network. Ratings can then be received for the experts accessed via the interactive social network and experts who contributed information to the integrated database, and incentive accounts associated with the experts can be updated based on the ratings.

These and other advantages of the invention will be apparent to those of ordinary skill in the art by reference to the following detailed description and the accompanying drawings.

### BRIEF DESCRIPTION OF THE DRAWINGS

FIG. 1 illustrates a workflow of a conventional change management (CM) tool handling a change request (RQ);

FIG. 2 illustrates a change management (CM) system according to an embodiment of the present invention;

FIG. 3 illustrates a change management method according to an embodiment of the present invention; and

FIG. 4 is a high level block diagram of a computer capable of implementing the present invention.

### DETAILED DESCRIPTION

The present invention relates to a change management method and system that supports and manages interactions with knowledge sources. Embodiments of the present invention provide a change management system that includes an integrated knowledge management system, supports and manages peer interactions over social networks, and includes an incentive component to encourage productive collaborations.

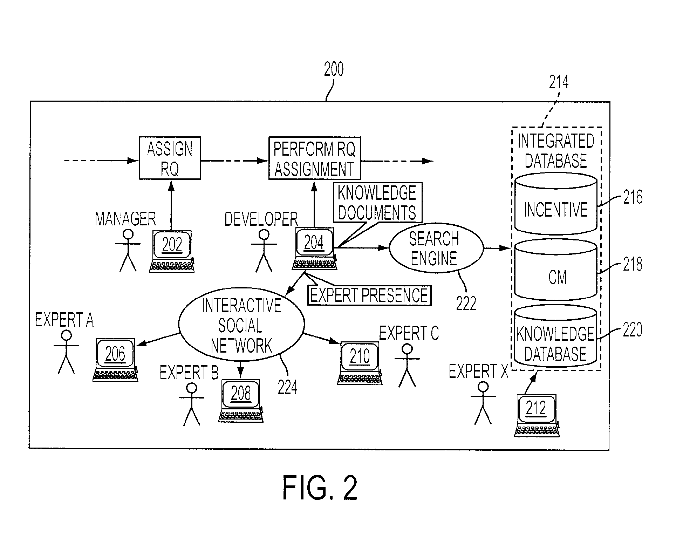

FIG. 2 illustrates a change management (CM) system 200 according to an embodiment of the present invention. The change management system 200 of FIG. 2 provides change management functionality by managing change requests similar to the conventional change management tool 100 of FIG. 1, but the CM system 200 of FIG. 2 has additional functionality as described below. The functionality of the CM system 200 is extended to include an integrated knowledge base, integration and support of social networking tools and services, management of interactions over supported social networks and with the integrated knowledge base, an incentive scheme to recognize, encourage, and reward productive collaborations, and an accounting system to support and manage the incentive scheme. The CM system 200 can support any type of collaborative project. Embodiments of the present invention are described herein in the context of software development, but the present invention is not limited thereto. The change management system 200 can be implemented on one or more computers (e.g., 202, 204, 206, 208, 210, and 212). For example, the change management can be implemented by one or more computers executing computer executable instructions (i.e., software) stored in memory of the computers. FIG. 2 illustrates users including a manager, developer, and experts using the CM system 200. As used herein, the term "users" or "employees" can refer to any or all of these types of users, as well as other types (i.e., testers, etc.) that are not shown in FIG. 2.

The CM system 200 maintains an integrated database 214. The integrated database 214 includes an incentive account database 216, a CM database 218, and a knowledge database 220. The incentive account database 216 stores incentive accounts for each employee of an organization. These incentive accounts can be bound to an employee profile (stored either in the incentive accounts database 216 or an other human resources database). The CM database 218 stores collaborative projects managed by the CM system 200 and information related to the collaborative projects. For example, when the CM system 200 is used in software development, the CM database 218 stores the software code, as well as information directly related to the software code, such as records of changes made in the software code, etc. The CM database 218 also stores changes to other software artifacts, such as requirements specifications and architecture requirements.

The knowledge database 220 that stores information that can be used to resolve a change request (RQ). The knowledge database 220, which is maintained and managed by the CM system 200, can store a variety of information sources that can be used by a developer in resolving a change request. Examples of such information sources stored in the knowledge database 220 include, but are not limited to, solutions to past RQs (in the current project and different projects); articles such as how-to-guides, FAQs, and tips & tricks; archives of online dialogs such as instant messaging sessions, user forums, and blogs. The knowledge database 220 can also store information regarding experts that have expertise relevant to resolving a RQ. Examples of information store in the knowledge database 220 related to an expert include, but are not limited to, keywords (expandable to short descriptions) of the areas of expertise, links to relevant contributions the expert has made to the knowledge base, a resume, and presence of the expert in any of the interactive social networks supported by the CM system 200 (e.g., instant messaging, net-meeting, etc.). The presence of an expert in an interactive social network is the state of the expert being currently online. In order to be able to find the expert on a given social network, information such as the user name of the expert in the interactive social network needs to be known by (i.e., stored in) the knowledge database 220.

The CM system has a built in search engine 222 for searching the integrated database 214. In particular, when a developer receives a RQ (at computer 204) from a manager (via computer 202), the developer can use the search engine 222 to conduct research utilizing the integrated knowledge database 220 managed by the CM system 200. The search engine 222 utilizes sophisticated (e.g., self-learning) search and filtering mechanisms that, coupled with the integrated knowledge database 220, allow the developer to research an issue more effectively and faster. For example, the search engine 222 can return a list of information sources available in the knowledge database 220 ordered by relevance, for example according to keywords in the RQ. The search engine 222 can also return a list of people in the community that have related expertise. It is also possible that the search engine 222 returns a list of information sources not managed by the CM system 200 (e.g., on the Internet). According to an advantageous embodiment of the present invention, the search engine can search the integrated database 214 automatically when an RQ is transmitted to a developer in order to automatically return at least one of the above-described lists to the developer without the developer initiating the search.

The CM system 200 also allows users (e.g., experts, developers) to add information to the integrated knowledge database 220. As illustrated in FIG. 2, expert X adds information (via computer 212) to the knowledge database 220 of the integrated database 214 managed by the CM system 200. For example, expert X can create a "how-to-guide" or article and store it in the knowledge database 220. Furthermore, when a developer uses an external source (not managed by the CM system 200) to gather information, the CM system 200 can support the developer adding the information from the external source into the integrated knowledge database 220. In this case, the developer is added as a "secondary" contributor of the information.

The CM system 200 manages and supports an interactive social network includes an interactive social network interface 224, which manages interactions between users over the supported interactive social network. For example, in order to find additional information to resolve an RQ, the developer (via computer 204) can utilize the interactive social network interface 224 to engage one or more experts (e.g., experts A, B, and C) in an online session via the interactive social network. At the end of such as session, the conversation can be saved to the knowledge database 220 linked to the RQ, and each person who took part in the conversation can be saved as a contributor.

The CM system 200 can manage an incentive scheme to encourage effective collaboration. The CM system 200 can credit users with "kudos points" for resolving an RQ collaborating with another user, adding an information source to the knowledge database 220, and other tasks related to resolving RQs. These kudos points are stored in incentive accounts associated with employees in the incentive account database 216. Employees' incentive accounts can be tied into an employee evaluation process in order to provide incentive for collaboration. For example, bonuses and/or promotions can be awarded at least in part on the number of kudos points in an employee's incentive account.

After an RQ is successfully resolved, the developer rates the value of the contribution of each collaborator by, for example, crediting kudos points to the collaborator's incentive accounts. The rating process may be a mandatory step in the change request workflow before the RQ can be closed. Alternatively, as an encouragement to rate collaborators, kudos points can be credited to the developer's incentive account after the developer has completed the rating process. The amount of kudos points available for distribution to collaborators may be based on the difficulty of the RQs, for example, as determined from staff-hours allocated by the project manager to clear the RQ.

Kudos points can be awarded to contributors who add information to the knowledge database 220. This encourages people to contribute to the knowledge database 220, even when it is not necessary to resolve an RQ. In case a piece of information has several contributors, e.g., participants in an online session or a how-to-guide with multiple authors, the kudos points earned for the information may be distributed to the contributors manually by the developer or automatically according to a predefined algorithm.

When the developer resolves an RQ, kudos points can be credited to the developers incentive account for resolving the RQ ahead of time and/or below cost. This would encourage the developer to work efficiently and engage in productive collaboration.

Accounts could also be created and stored in the incentive accounts database 216 to rate and track contributions from collaborators from outside of the community, This would allow the CM system 200 to better target external experts to help resolve RQs. This would also enable the CM system 200 to preload the contributions of external experts immediately, as they appear, e.g., on the Internet.

Kudos points in an employee's incentive accounts can be converted into incentive (bonus) payouts, for example at the end of a fiscal year. It is possible that the CM system 200 automatically calculates incentive payouts for an employee based on the number of kudos points in the incentive account of the employee, for example based on a predefined formula. Since kudos points are earned for productive contribution and collaboration, they can be used by managers and human resources for performance management and career planning purposes. Kudos points earned by external experts, although not converted into incentive payouts, can be used for targeted hiring of experts having specific skill sets.

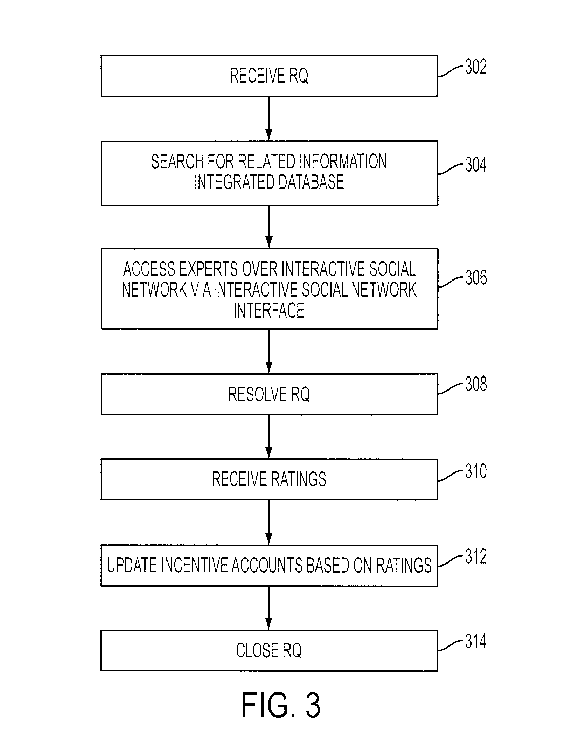

FIG. 3 illustrates a change management method according to an embodiment of the present invention. The method of FIG. 3 is performed by a change management system that manages an integrated knowledge database and interactions with a social network for accessing experts, such as the CM system 200 of FIG. 2. Accordingly, FIG. 2 is referred to herein while describing the method of FIG. 3. At step 302, a change request (RQ) is received. In particular, the RQ is received at computer 204 of the developer. The RQ can be received from a computer 202 of a manager. In the case of software development, the RQ can be generated by a tester in response to detection of a problem with the software code being developed and sent to the manager, who assigns the RQ to the developer.

At step 304, the integrated DB 214 maintained by the CM system 200 is searched for information related to the RQ. The integrated DB 214 may be automatically searched when the developer receives the RQ. The CM system 200 can provide the developer with a list of related information sources available in the knowledge database 220, as well as a list of experts accessible via the interactive social network that have related expertise. The developer can use the information sources available in the knowledge database 220 maintained by the CM system in order to perform research necessary to resolve the RQ. Furthermore, the developer may also resort to unmanaged (external) sources, and the CM system 200 provides support for the developer to add information from the external sources into the integrated knowledge database 220.

It is possible that the knowledge database 220 can provide the developer with all the information that is needed to resolve the RQ. The information used to resolve an RQ is then linked to the RQ in the knowledge database 220. This information can be later used by a search algorithm used by the search engine 222 to improve searches of the knowledge database 220. However, if the developer is unable to find all the necessary information in the knowledge database 220 (or unmanaged sources), the developer can access one or more experts. At step 306, one or more experts are accessed over the interactive social network via the interactive social network interface 224 of the CM system 200. For example, the developer can communicate with the experts via an online session, and at the end of the session, the conversation is saved to the knowledge database 220 and linked to the current RQ. It is possible that the developer selects which experts to communicate with over the interactive social network based on the list of experts returned from searching the knowledge database 220. It can be noted that an expert must be currently present on the network in order to be reachable, and as described above, the knowledge database 220 may include information regarding an expert's presence on an interactive social network.

At step 308, the RQ is resolved based on information gained from the knowledge database and the collaboration with the experts. Using this information, the developer can make changes to the current project in order to resolve the RQ. For example, in software development, the developer can utilize the information to make appropriate changes in the software code that is being developed. It can be noted that the developer may solve the RQ through one or more iterations of steps 304 and 306. For example, an online session with experts may not resolve the RQ, but may provide the developer with tips for further information sources. It can also be noted that the RQ may be solved based on information gained from the knowledge database alone, without the need for collaboration with experts.

At step 310, ratings are received from the developer for the information sources in the knowledge database 220 and the experts that collaborated with the developer via the interactive social network. The developer can rate the contributions of the collaborating experts, as well as any information sources used by the developer to resolve the RQ. These ratings can provide a measure of quality of the information available in the knowledge database 220, and quantitatively highlight the quality of available experts. The ratings can be taken into account in future knowledge database 220 searches in order to increase the efficiency of finding useful information and listing quality experts. According to a possible implementation, it may be mandatory that the ratings be received before the RQ can be closed. According to another possible implementation, the ratings may not be mandatory, but the developer is rewarded (e.g., with kudos points in his/her incentive account) for entering the ratings.
At step 312, incentive accounts are updated based on the ratings. In particular, incentive accounts stored in the incentive accounts database 216 for the experts and/or the contributors of the information sources are updated based on the ratings. In particular, kudos points can be credited to the experts and/or contributors based on the ratings received from the developer. The incentive account for the developer can also be updated. For example, the incentive account of the developer can be updated to credit kudos points to the developer's incentive account for rating collaborating experts and the information sources used, and/or for successfully resolving the RQ ahead of time or under budget. As described above, the CM system 200 can automatically calculate incentive payments for employees based in the incentive accounts of the employees. Furthermore, incentive accounts can be taken into account in employee evaluation. This rewards employees for collaborating with other employees and contributing to the knowledge database 220.

At step 314, the RQ is closed. Similar to the workflow in the conventional change management process described above, the resolved RQ can be sent to a tester to validate the RQ, and if there are no further problems with the RQ, the RQ is closed, and the project is updated in the CM database 218.

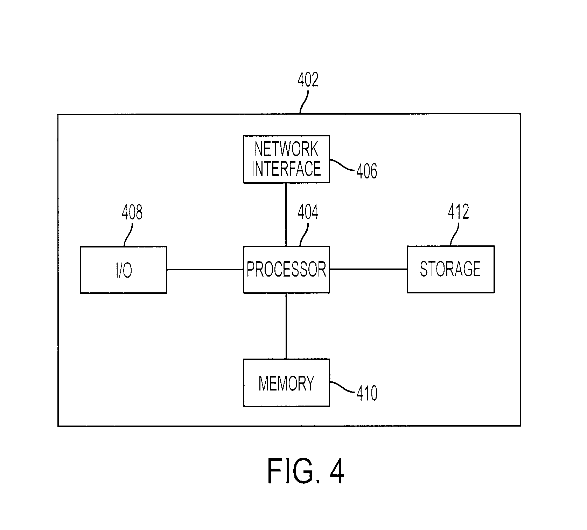

The CM system 200 of FIG. 2 and the above-described CM methods may be implemented on a computer or network of computers using well-known computer processors, memory units, storage devices, computer software, and other components. A high level block diagram of such a computer is illustrated in FIG. 4. Computer 402 contains a processor 404 which controls the overall operation of the computer 402 by executing computer program instructions which define such operation. The computer program instructions may be stored in a storage device 412 (e.g., magnetic disk) and loaded into memory 410 when execution of the computer program instructions is desired. Thus, the method steps illustrated in FIG. 3 can be implemented by computer program instructions stored in the memory 410 and/or storage 412 and controlled by the processor 404 executing the computer program instructions. Furthermore, the integration platform and the applications may also be implemented using computer program instructions stored in the memory 410 and/or storage 412 and controlled by the processor 404 executing the computer program instructions. The computer 402 also includes one or more network interfaces 406 for communicating with other devices via a network. The computer 402 also includes other input/output devices 408 that enable user interaction with the computer 402 (e.g., display, keyboard, mouse, speakers, buttons, etc.) One skilled in the art will recognize that an implementation of an actual computer could contain other components as well, and that FIG. 4 is a high level representation of some of the components of such a computer for illustrative purposes.

An apparatus comprising means for receiving a change request (RQ) in a change management (CM) system; means for searching for information related to the RQ in an integrated database maintained by the CM system; means for accessing at least one of a plurality of experts on an interactive social network supported by the CM system via an interactive social network interface of the CM system; and means for resolving the RQ based on the information in the integrated database and the experts on the interactive social network.

The apparatus above, wherein the means for searching for information related to the RQ in an integrated database maintained by the CM system comprises means for retrieving a list of information sources related to the RQ available in a knowledge database of the integrated database; and means for retrieving a list of experts accessible via the interactive social network with expertise related to the RQ.

The apparatus above, further comprising means for receiving ratings for the at least one of the plurality of experts accessed via the interactive social network; and means for updating incentive accounts associated with the at least one of the plurality of experts based on the ratings.

The apparatus above further comprising means for updating an incentive account associated with a user who entered the ratings in response to receiving the ratings.

The apparatus above, further comprising means for automatically calculating an incentive payment for the at least one of the plurality of experts based on the incentive accounts associated with the at least one of the plurality experts.

The foregoing Detailed Description is to be understood as being in every respect illustrative and exemplary, but not restrictive, and the scope of the invention disclosed herein is not to be determined from the Detailed Description, but rather from the claims as interpreted according to the full breadth permitted by the patent laws. It is to be understood that the embodiments shown and described herein are only illustrative of the principles of the present invention and that various modifications may be implemented by those skilled in the art without departing from the scope of the invention. Those skilled in the art could implement various other feature combinations without departing from the scope of the invention.

## Claims

1. A change management (CM) system for generating and resolving change requests to manage changes to a collaborative project, comprising: an integrated database including:
a CM database configured to store the collaborative project and information related to changes to the collaborative project,
an incentive accounts database configured to store incentive accounts associated with a plurality of users, and
a knowledge database configured to store information sources to help resolve a change request;
a search engine configured to search the integrated database for information related to change requests; and
an interactive social network interface configured to access a plurality of experts over an interactive social network.

2. The system of claim 1, wherein the search engine is configured to return a list of information sources available in the knowledge database that are related to a change request or to return a list of experts accessible via the interactive social network that have expertise related to a change request.

3. The system of claim 1, wherein the information sources stored in the knowledge database include at least one of solutions to past change requests, articles, how-to-guides, FAQs, and archives of online dialogs.

4. The system of claim 1, wherein the knowledge database is configured to store information about experts, the information about each expert including at least one of keywords of areas of expertise, links to relevant contributions made to the knowledge database, a resume, and a user name and presence of the expert in the interactive social network.

5. The system of claim 1, wherein the incentive account associated with a user tracks points credited to the user based on collaborations with another user via the interactive social network and contributions made to the knowledge database.

6. A method for change management, comprising:
receiving a change request (RQ) in a change management (CM) system;
searching for information related to the RQ in an integrated database maintained by the CM system;
accessing at least one of a plurality of experts on an interactive social network supported by the CM system via an interactive social network interface of the CM system; and
resolving the RQ based on the information in the integrated database and the experts on the interactive social network.

7. The method of claim 6, wherein the step of searching for information related to the RQ in an integrated database maintained by the CM system comprises:
automatically searching the integrated database for information related to the RQ in response to receiving the RQ or comprises:
retrieving a list of information sources related to the RQ available in a knowledge database of the integrated database; and
retrieving a list of experts accessible via the interactive social network with expertise related to the RQ.

8. The method of claim 6, wherein the step of accessing at least one of a plurality of experts on an interactive social network supported by the CM system via an interactive social network interface of the CM system comprises:
initiating an online session with the at least one of the plurality of experts regarding the RQ.

9. The method of claim 6, further comprising:
receiving ratings for the at least one of the plurality of experts accessed via the interactive social network; and
updating incentive accounts associated with the at least one of the plurality of experts based on the ratings.

10. The method of claim 9, wherein the step of receiving ratings is mandatory in order for the RQ to be closed.

11. The method of claim 9, further comprising:
updating an incentive account associated with a user who entered the ratings in response to receiving the ratings.

12. The method of claim 9, further comprising:
updating the incentive account of a user who resolved the RQ based on the RQ being resolved ahead or time or below cost.

13. The method of claim 9, wherein the incentive accounts are stored in an incentive accounts database of the integrated database.

14. The method of claim 9, further comprising:
automatically calculating an incentive payment for the at least one of the plurality of experts based on the incentive accounts associated with the at least one of the plurality experts.

15. A computer readable medium encoded with computer executable instructions for performing a change management method according to any one of claims 6 to 14.
